# EUROPEAN PATENT SPECIFICATION

(11) **EP 2 675 081 B1**
(45) Date of publication and mention of the grant of the patent: **09.05.2018**
(21) Application number: 12758254.2
(22) Date of filing: 12.03.2012
(51) Int. Cl.: H04W 72/12

(54) **METHOD, SYSTEM AND DEVICE FOR SCHEDULING UPLINK DATA**
VERFAHREN, SYSTEM UND VORRICHTUNG ZUR TERMINPLANUNG VON UPLINK-DATEN
PROCÉDÉ, SYSTÈME ET DISPOSITIF POUR L'ORDONNANCEMENT DE DONNÉES DE LIAISON MONTANTE

(30) Priority: 11.03.2011 CN 201110059133
(43) Date of publication of application: 18.12.2013
(73) Proprietor: Huawei Technologies Co., Ltd., Longgang District Shenzhen, Guangdong 518129 (CN)
(72) Inventor: QUAN, Wei, Shenzhen Guangdong 518129 (CN); JIANG, Yi, Shenzhen Guangdong 518129 (CN)
(74) Representative: Pfenning, Meinig & Partner mbB
(86) International application number: PCT/CN2012/072180
(87) International publication number: WO 2012/122924

(56) References cited:
- WO-A2-2010/018942
- CN-A- 101 426 271
- CN-A- 101 489 305
- CN-A- 101 803 237
- CN-A- 101 977 099
- US-A1- 2007 121 542
- US-A1- 2010 202 420

## Description

### TECHNICAL FIELD

The present invention relates to the field of communication technologies, and in particular, to a method, a system and an apparatus for scheduling uplink data.

### BACKGROUND

In a communication system such as a long term evolution (Long Term Evolution, LTE) network system, a base station such as an evolved NodeB (evolved Node B, eNB) in an LTE network may allocate resources to a user equipment (User Equipment, UE) for transmitting downlink data and uplink data at an air interface. The base station may directly allocate downlink resources to the UE, and schedule the user equipment to receive downlink data; when allocating uplink resources to the user equipment, the base station obtains information on the amount of data to be sent by the user equipment, and then allocates appropriate uplink resources to the user equipment.

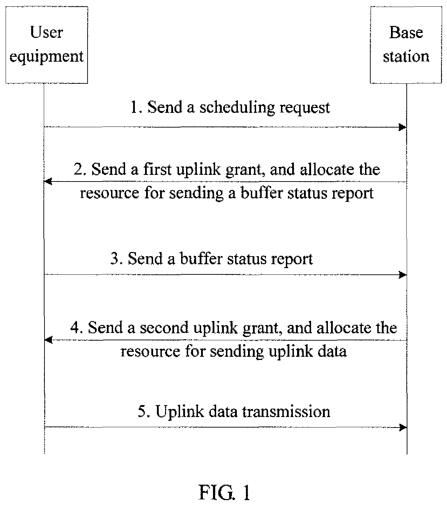

Specifically, as shown in FIG. 1, the base station may use the following method to allocate uplink resources, that is, to perform uplink scheduling:
1. When the user equipment has uplink data to be sent, the user equipment notifies the base station of the amount of buffered uplink data by sending a buffer status report (Buffer Status Report, BSR) to the base station. However, if no uplink resource is available for sending the BSR, the user equipment sends a scheduling request (Scheduling Request, SR) to the base station to obtain allocated uplink resources first, where the SR indicates that the user equipment has uplink data to be sent.
2. After receiving the SR, the base station determines that the user equipment has uplink data to be sent, and sends a first uplink grant (UL Grant) to the user equipment, indicating a first uplink resource allocated by the base station to the user equipment, where the first uplink resource is used for sending the BSR and can also be used for transmitting part or all of data.
3. After receiving the first UL Grant, the user equipment sends the BSR to the base station on the first uplink resource allocated by the base station to the user equipment, to inform the base station of the amount of buffered uplink data.
4. After receiving the BSR, the base station knows the amount of uplink data of the user equipment, and sends a second uplink grant to the user equipment, indicating a second uplink resource allocated by the base station to the user equipment, where the second uplink resource is used for transmitting the uplink data.
5. After receiving the second uplink grant, the user equipment transmits the uplink data on the second uplink resource allocated by the base station to the user equipment; and the user equipment may also send a padding BSR on the second uplink resource.

In the existing process of allocating uplink resources, the base station needs to send the uplink grant twice to allocate the resources to the user equipment for sending the BSR and the uplink data respectively, which leads to deficiency of timeliness and accuracy of the uplink resources allocated by the base station. US2007/0121542 A1 discloses a method for scheduling in which a scheduling request may indicate a transmission mode.

### SUMMARY

The invention is defined in the independent claims. Preferred embodiments are defined in the dependent claims. Embodiments of the present invention provide a method, a system, and an apparatus for scheduling uplink data to achieve timeliness and accuracy of uplink resources allocated by a base station and improve performance of scheduling uplink data.

According to a first aspect of the present invention, a method for scheduling uplink data includes:
sending configuration information to a user equipment, where the configuration information is used to configure a mode in which a scheduling request sent by the user equipment indicates an attribute of uplink data buffered by the user equipment, wherein the attribute of the uplink data buffered by the user equipment comprises at least one of: a range of an amount of the uplink data buffered by the user equipment, a range of a priority level of a logical channel carrying the uplink data buffered by the user equipment, and a type of the logical channel carrying the uplink data buffered by the user equipment;
receiving the scheduling request sent by the user equipment according to the configuration information, where the scheduling request carries indication information indicating the attribute of the uplink data buffered by the user equipment; and
allocating an uplink resource to the user equipment according to the indication information carried in the scheduling request.

According to a second aspect of the present invention, an uplink scheduling method includes:
receiving configuration information sent by a base station, where the configuration information is used to configure a mode in which a scheduling request sent by user equipment indicates an attribute of uplink data buffered by the user equipment, wherein the attribute of the uplink data buffered by the user equipment comprises at least one of: a range of an amount of the uplink data buffered by the user equipment, a range of a priority level of a logical channel carrying the uplink data buffered by the user equipment, and a type of the logical channel carrying the uplink data buffered by the user equipment; and
sending the scheduling request to the base station according to the mode configured by the configuration information, where the scheduling request carries indication information indicating the attribute of the uplink data buffered by the user equipment so that the base station allocates an uplink resource to the user equipment according to the indication information carried in the scheduling request.

According to a third aspect of the present invention, a base station includes:
a configuration sending unit, configured to send configuration information to user equipment, where the configuration information is used to configure a mode in which a scheduling request sent by the user equipment indicates an attribute of uplink data buffered by the user equipment, wherein the attribute of the uplink data buffered by the user equipment comprises at least one of: a range of an amount of the uplink data buffered by the user equipment, a range of a priority level of a logical channel carrying the uplink data buffered by the user equipment, and a type of the logical channel carrying the uplink data buffered by the user equipment;
a scheduling receiving unit, configured to receive the scheduling request sent by the user equipment according to the configuration information sent by the configuration sending unit, where the scheduling request carries indication information indicating the attribute of the uplink data buffered by the user equipment; and
a scheduling unit, configured to allocate uplink resource to the user equipment according to the indication information carried in the scheduling request received by the scheduling receiving unit.

According to a fourth aspect of the present invention, a user equipment includes:
a configuration receiving unit, configured to receive configuration information sent by a base station, where the configuration information is used to configure a mode in which a scheduling request sent by a user equipment indicates an attribute of uplink data buffered by the user equipment, wherein the attribute of the uplink data buffered by the user equipment comprises at least one of: a range of an amount of the uplink data buffered by the user equipment, a priority level of a logical channel carrying the uplink data buffered by the user equipment, and a type of the logical channel carrying the uplink data buffered by the user equipment; and
a scheduling request sending unit, configured to send the scheduling request to the base station according to the mode configured by the configuration information received by the configuration receiving unit, where the scheduling request carries indication information indicating the attribute of the uplink data buffered by the user equipment so that the base station allocates an uplink resource to the user equipment according to the indication information carried in the scheduling request.

Therefore, in the embodiments of the present invention, a base station notifies configuration information to a user equipment, where the configuration information is used to configure the mode in which a scheduling request sent by the user equipment indicates the attribute of buffered uplink data; when the base station receives the scheduling request that is sent by the user equipment according to the configuration information, the base station allocates an uplink resource to the user equipment according to the indication information carried in the scheduling request. In this way, when the user equipment sends the scheduling request, the scheduling request may indicate that there is uplink data needed to be sent, and may also indicate specific attribute information of the uplink data to be sent, so that the base station can allocate uplink resources, that is, perform uplink scheduling, timely and accurately according to the information on the uplink data that needs to be sent by the user equipment. Accordingly, the base station can schedule the uplink data of the user equipment timely and accurately, and the performance of scheduling the uplink data is improved.

### BRIEF DESCRIPTION OF DRAWINGS

To describe the technical solutions in embodiments of the present invention or in the prior art more clearly, the following briefly introduces the accompanying drawings needed for describing embodiments or the prior art. Apparently, the accompanying drawings in the following description show merely some embodiments of the present invention, and persons of ordinary skill in the art may still derive other drawings from the accompanying drawings without creative efforts.
FIG. 1 is a flowchart of a method for a base station to schedule uplink data for user equipment;
FIG. 2 is a flowchart of a method for scheduling uplink data according to an embodiment of the present invention;
FIG. 3 is a flowchart of a method for scheduling uplink data according to an embodiment of the present invention;
FIG. 4 is a schematic structural diagram of a base station according to an embodiment of the present invention;
FIG. 5 is a schematic structural diagram of another base station according to an embodiment of the present invention;
FIG. 6 is a schematic structural diagram of another base station according to an embodiment of the present invention; and
FIG. 7 is a schematic structural diagram of user equipment according to an embodiment of the present invention.

### DESCRIPTION OF EMBODIMENTS

The following clearly and comprehensively describes the technical solutions in embodiments of the present invention with reference to the accompanying drawings of embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

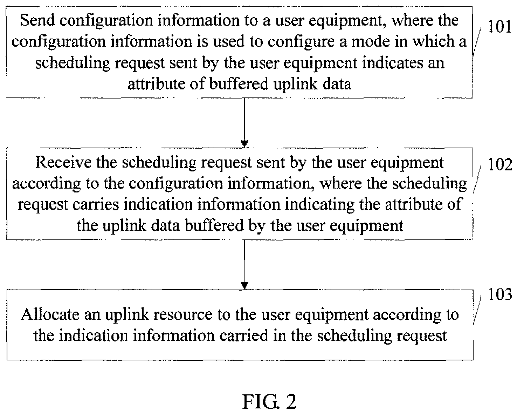

An embodiment of the present invention provides a method for scheduling uplink data, which is mainly applicable to uplink data scheduling (that is, uplink resource allocation) performed by a base station for user equipment. The method in this embodiment is performed by the base station. As shown in FIG 2, the method includes the following steps:
Step 101: Send configuration information to user equipment, where the configuration information is used to configure a mode in which a scheduling request sent by the user equipment indicates an attribute of buffered uplink data.

In the embodiment, the base station may notify the configuration information to the user equipment by carrying the configuration information in an existing information element, or a new added information element, or a certain field of the existing information element of a radio resource control (Radio Resource Control, RRC) message. The RRC message here may be a radio resource control connection setup (RRC Connection Setup) message, or a radio resource control connection reconfiguration (RRC Connection Reconfiguration) message, or a radio resource control connection reestablishment (RRC Connection Reestablishment) message, or the like. The base station may also notify the configuration information to all user equipment in a cell by carrying the configuration information in a broadcast message. The base station may also notify the configuration information to the user equipment through other messages, and the specific type of the message shall not constitute a restriction on the present invention.

The attribute of the uplink data refers to the inherent characteristics of the uplink data, for example, amount of uplink data, information of a logical channel (Logical Channel, LCH) carrying the uplink data, such as information on the priority level or type of a LCH . The mode configured by the base station, in which the scheduling request sent by the user equipment indicates the attribute of the buffered uplink data, may include at least one of the following modes: the scheduling request sent by the user equipment carries the indication information indicating the attribute of the uplink data, the physical uplink control channel format to be used by the user equipment for sending the scheduling request, and the number of times of sending the scheduling request, for example:
The base station may configure that, when the user equipment sends a scheduling request, a set indication value is used to indicate at least one piece of the following information: the amount of uplink data buffered by the user equipment; a priority level of a logical channel carrying the buffered uplink data; a type of the logical channel carrying the buffered uplink data, for example, data radio bearer (Data Radio Bearer, DRB) or signaling radio bearer (Signaling Radio Bearer, SRB); arrival of uplink data whose priority level is higher than the priority level of the uplink data that has already triggered a buffer status report (hereinafter referred to as BSR) or triggering of a new BSR on the user equipment in a period from the user equipment's sending the scheduling request to receiving a corresponding uplink grant,.

Through the configuration information, the base station may configure that the user equipment uses format (Format) 1, or format 1a, or format 1b, or format 2, or format 2a, or format 2b of the physical uplink control channel (Physical Uplink Control Channel, PUCCH) to send a scheduling request, and may define new formats. The embodiment of the present invention does not restrict the format.

Step 102: Receive the scheduling request sent by the user equipment according to the configuration information, where the scheduling request carries indication information indicating the attribute of the uplink data buffered by the user equipment.

Understandably, after the user equipment receives the configuration information sent by the base station, a scheduling request is triggered if any uplink data needs to be sent and a BSR is triggered but no uplink resource is available for sending the BSR. When sending the scheduling request, the user equipment sends the scheduling request according to the configuration information. The configuration information may include the format to be used for sending the scheduling request, and the indication value to be used for indicating the buffered uplink data to be sent.

Step 103: Allocate an uplink resource to the user equipment according to the indication information carried in the scheduling request.

The indication information in the scheduling request received by the base station and sent by the user equipment is used to indicate attribute information of the uplink data buffered and to be sent by the user equipment. Therefore, specifically, at the time of allocating the uplink resource, if the indication information indicates a range of the amount of the buffered uplink data, the user equipment may allocate the uplink resource corresponding to the range of the amount of the uplink data to the user equipment; if the indication information indicates a low priority level of the logical channel carrying the buffered uplink data, the base station may postpone allocating uplink resources to the uplink data for a certain time; if the indication information indicates the arrival of uplink data of higher priority, the base station may preferentially allocate resources to the user equipment that has the uplink data of higher priority, and so on.

After allocating the uplink resource, the base station signals the uplink resource to the user equipment through an uplink grant. After the user equipment receives the uplink grant, if the uplink resource allocated by the base station is enough for sending all buffered uplink data, the user equipment may send the uplink data directly; if the uplink resource are not enough for sending the buffered uplink data, the user equipment sends the BSR first, which may include a part of the uplink data.

Therefore, in the embodiment of the present invention, a base station notifies configuration information to a user equipment, where the configuration information is used to configure a mode in which a scheduling request sent by the user equipment indicates the attribute of buffered uplink data; when the base station receives the scheduling request that is sent by the user equipment according to the configuration information, the base station allocates an uplink resource to the user equipment according to the indication information carried in the scheduling request. In this way, when the user equipment sends the scheduling request, the scheduling request may indicate that there is uplink data that needs to be sent, and moreover specific attribute information of the uplink data to be sent may also be indicated, so that the base station can allocate uplink resources, that is, perform uplink data scheduling timely and accurately according to the information on the uplink data that needs to be sent by the user equipment. Accordingly the base station can schedule the uplink data of the user equipment timely and accurately, and the performance of scheduling is improved.

In a specific embodiment, when the base station performs step 101, the configuration information includes a first configuration item. The first configuration item is used to configure a first indication value of the scheduling request, and the first indication value is used to indicate the amount of uplink data buffered by the user equipment.

Therefore, the scheduling request received by the base station in step 102 carries the first indication value, and, when performing step 101, the base station may allocate to the user equipment the uplink resource corresponding to the amount of uplink data indicated by the first indication value.

For example, the configuration information sent by the base station is used to configure that the user equipment employs format 1a of the PUCCH and uses the indication mode as shown in Table 1 to indicate the attribute of the buffered uplink data to be sent:

**Table 1**

| **Range of amount of buffered uplink data** | **Indication value in the sent SR** |
|---|---|
| Data amount <= 10 bytes | 0 |
| Data amount > 10 bytes | 1 |

In this way, after receiving the configuration information, the user equipment sends a scheduling request according to the mode configured in the configuration information. After the base station receives the scheduling request sent by the user equipment, if the indication information in the scheduling request is 0, the base station may directly allocate to the user equipment the uplink resource sufficient for transmitting 10 bytes; if the protocol header overhead of uplink data encapsulation is taken into account, the base station may allocate to the user equipment the uplink resource sufficient for transmitting several bytes more than 10 bytes, and signal the allocated uplink resource to the user equipment through an uplink grant.

After receiving the uplink grant, the user equipment finds that the allocated uplink resource in the uplink grant is enough for sending the buffered uplink data, and therefore, the user equipment sends the uplink data, which needs to be sent, to the base station at a time, thereby saving the procedure that the user equipment sends a BSR first and then the base station reallocates uplink resources to perform scheduling. That reduces transmission delay of the uplink data, simplifies the transmission process of the uplink data, and saves the physical downlink control channel (PDCCH) overhead consumed in repeatedly scheduling the uplink resources.

For another example, the configuration information sent by the base station is used to configure that the user equipment employs format 1b/2/2a/2b of the PUCCH, and uses the indication mode as shown in Table 2 to indicate the attribute of the buffered uplink data to be sent:

**Table 2**

| **Range of amount of buffered uplink data** | **Indication value in the sent SR** |
|---|---|
| Data amount <= 10 bytes | 00 |
| 10 bytes < data amount <= 20 bytes | 01 |
| 20 bytes < data amount <= 30 bytes | 10 |
| 30 bytes < data amount | 11 |

In this way, after the base station receives the scheduling request sent by the user equipment, if the indication information in the scheduling request is 01, the base station may directly allocate to the user equipment the uplink resource sufficient for transmitting 20 bytes ; if the protocol header overhead of uplink data encapsulation is taken into account, the base station may allocate to the user equipment the uplink resource sufficient for transmitting several bytes more than 20 bytes, and signal the allocated uplink resource to the user equipment through an uplink grant.

In another specific embodiment, when the base station performs step 101, the configuration information includes a second configuration item. The second configuration item is used to configure a second indication value of the scheduling request, and the second indication value is used to indicate the priority level of the logical channel carrying the uplink data buffered by the user equipment.

Therefore, the scheduling request received by the base station in step 102 carries a second indication value; when the base station performs resource allocation in step 103, if it is determined that the priority level of the logical channel carrying the uplink data buffered by the user equipment, is lower than a set value, where the priority level is indicated by the second indication value, the base station may postpone allocating uplink resources to the user equipment for first duration; if it is determined that the priority level of the logical channel carrying the uplink data buffered by the user equipment is equal to or higher than the set value, where the priority level is indicated by the second indication value, the base station may bring forward allocating uplink resources to the user equipment by second duration.

It should be noted that when the base station receives the scheduling request, the base station decides whether to postpone the resource allocation according to the second indication information in the scheduling request and the actual conditions of the base station. For example, in circumstances such as resource shortage of the base station or heavy load of the cell, the base station can postpone allocating uplink resources to the user equipment for certain duration and allocate uplink resources to other user equipment first.

For example, the configuration information sent by the base station is used to configure that the user equipment employs format la of the PUCCH, and uses the indication mode as shown in Table 3 to indicate the attribute of the buffered uplink data to be sent:

**Table 3**

| **Range of priority level of the logical channel carrying the uplink data** | **Indication value in the sent SR** |
|---|---|
| Priority level of the logical channel carrying the uplink data <= 2 | 0 |
| Priority level of the logical channel carrying the uplink data > 2 | 1 |

In this way, after receiving the configuration information, the user equipment sends a scheduling request according to the mode configured in the configuration information. After the base station receives the scheduling request sent by the user equipment, if the indication information in the scheduling request is 1, it means that the priority level of the logical channel carrying the highest-priority uplink data currently buffered in the user equipment is lower than 2; if the resources of the base station are currently stringent and the cell load is heavy, the base station may postpone scheduling the uplink resources for the user equipment for proper duration without affecting the quality of service (Quality of Service, QoS) thereof, and schedule resources for higher-priority data of other user equipment first, thereby optimizing the scheduling performance of the system.

If the indication information in the scheduling request is 0, it means that the priority level of the logical channel carrying the highest-priority uplink data currently buffered in the user equipment is higher than 2, and resources need to be allocated for the uplink data of this user equipment first. Here it is assumed that a smaller value represents a higher priority level, that is, 0 represents the highest priority level, and 1, 2, 3, ... represent descending priority levels respectively.

For another example, the configuration information sent by the base station is used to configure that the user equipment employs format 1b/2/2a/2b of the PUCCH, and uses the indication mode as shown in Table 4 to indicate the attribute of the buffered uplink data to be sent:

**Table 4**

| **Range of priority level of the logical channel carrying the uplink data** | **Indication value in the sent SR** |
|---|---|
| Priority level of the logical channel carrying the uplink data <= I | 00 |
| 1 < priority level of the logical channel carrying the uplink data <= 3 | 01 |
| 3 < priority level of the logical channel carrying the uplink data <= 5 | 10 |
| Priority level of the logical channel carrying the uplink data > 5 | 11 |

In this way, after receiving the configuration information, the user equipment sends a scheduling request according to the mode configured in the configuration information. After the base station receives the scheduling request sent by the user equipment, if the indication information in the scheduling request is 00, the base station may postpone scheduling the uplink resources for the user equipment for proper duration without affecting the quality of service (Quality of Service, QoS) thereof, and schedule resources for higher-priority data of other user equipment first, thereby optimizing the scheduling performance of the system.

In another specific embodiment, when the base station performs step 101, the configuration information includes a third configuration item. The third configuration item is used to configure a third indication value of the scheduling request, and the third indication value is used to indicate that the type of the logical channel carrying the uplink data buffered by the user equipment is DRB or SRB.

Therefore, the scheduling request received by the base station in step 102 carries a third indication value; when the base station performs resource allocation in step 103, if it is determined that the type of the logical channel carrying the uplink data buffered by the user equipment is the DRB, where the type is indicated by the third indication value, the base station may postpone allocating uplink resources to the user equipment for third duration; if it is determined that the type of the logical channel carrying the uplink data buffered by the user equipment is the SRB, where the type is indicated by the third indication, the base station may bring forward allocating uplink resources to the user equipment by fourth duration.

For example, the configuration information sent by the base station is used to configure that the user equipment employs format 1a of the PUCCH, and uses the indication mode as shown in Table 5 to indicate the attribute of the buffered uplink data to be sent:

**Table 5**

| **Type of the logical channel carrying the uplink data** | **Indication value in the sent SR** |
|---|---|
| The uplink data includes only DRB data | 0 |
| The uplink data includes SRB data | 1 |

In this way, after receiving the configuration information, the user equipment sends a scheduling request according to the mode configured in the configuration information. After the base station receives the scheduling request sent by the user equipment, if the indication information in the scheduling request is 0, it means that the type of the uplink data currently buffered in the user equipment is the DRB; if the resources of the base station are currently stringent and the cell load is heavy, the base station may postpone scheduling the uplink resources for the user equipment for proper duration without affecting its QoS, and schedule resources for higher-priority data of other user equipment first, thereby optimizing the scheduling performance of the system; if the indication information in the scheduling request is 1, the base station needs to allocate the resource for the uplink data of this user equipment first.

It should be noted that the base station may also use the configuration information to configure the user equipment in such a way that the sent scheduling request includes an indication value, which is set to indicate more than two attributes of the buffered uplink data, for example:
The configuration information sent by the base station is used to configure that the user equipment employs format 1b/2/2a/2b of the PUCCH, and uses the indication mode as shown in Table 6 to indicate the attributes of the buffered uplink data to be sent:

**Table 6**

| **Logical channel carrying the uplink data and data amount** | **Indication value in the sent SR** |
|---|---|
| The priority level of the logical channel carrying the uplink data is higher than a set threshold value, and the data amount is less than or equal to a set threshold value | 00 |
| The priority level of the logical channel carrying the uplink data is higher than a set threshold value, and the data amount is greater than a set threshold value | 01 |
| The priority level of the logical channel carrying the uplink data is not higher than a set threshold value, and the data amount is less than or equal to a set threshold value | 10 |
| The priority level of the logical channel on which the uplink data is carried is not higher than a set threshold value, and the data amount is greater than a set threshold value | 11 |

In this way, after receiving the configuration information, the user equipment sends a scheduling request according to the mode configured in the configuration information. After the base station receives the scheduling request sent by the user equipment, if the indication information in the scheduling request is 00, the scheduling for the uplink data of this user equipment needs to be performed first, and the scheduling performance of the system is optimized; and the uplink resource sufficient for sending a data amount equivalent to a preset threshold value (or larger than the preset threshold value by several bytes) can be allocated to the user equipment.

For another example, the configuration information sent by the base station is used to configure that the user equipment employs format lb/2/2a/2b of the PUCCH, and uses the indication mode as shown in Table 7 to indicate the attributes of the buffered uplink data to be sent:

**Table 7**

| **Priority level and type of the logical channel carrying the uplink data** | **Indication value in the sent SR** |
|---|---|
| The uplink data includes SRB data, and the amount of the SRB data <= the set threshold value | 00 |
| The uplink data includes SRB data, and the amount of the SRB data > the set threshold value | 01 |
| The uplink data includes DRB data, and the amount of the SRB data <= the set threshold value | 10 |
| The uplink data includes DRB data, and the amount of the SRB data > the set threshold value | 11 |

In this way, after receiving the configuration information, the user equipment sends a scheduling request according to the mode configured in the configuration information. After the base station receives the scheduling request sent by the user equipment, if the indication information in the scheduling request is 00, the scheduling for the uplink data of this user equipment needs to be performed first, and the scheduling performance of the system is optimized; and the uplink resource that is on the SRB channel and sufficient for sending a data amount equivalent to a preset threshold value (or larger than the preset threshold value by several bytes) can be allocated to the user equipment.

In another specific embodiment, when the base station performs step 101, the configuration information includes a fourth configuration item. The fourth configuration item is used to configure a fourth indication value of the scheduling request, and the fourth indication value is used to indicate the arrival of uplink data whose priority level is higher than the priority level of the uplink data that has already triggered a buffer status report or triggering of a new buffer status report on the user equipment in a period from the user equipment's sending a previous scheduling request to receiving a corresponding uplink grant.

Therefore, the scheduling request received by the base station in step 102 carries the fourth indication value, and, when the base station performs step 104, if the fourth indication value in the scheduling request has changed compared to the fourth indication value in the previously sent scheduling request, the base station may preferentially allocate uplink resources to the user equipment corresponding to the scheduling request that carries the changed fourth indication value.

For example, the configuration information sent by the base station includes a fourth configuration item, and therefore, the indication value in the scheduling request sent by the user equipment is 0; if uplink data of higher priority level arrives or a new BSR is triggered before the user equipment receives an uplink grant from the base station in response to the scheduling request, the user equipment re-sends the scheduling request according to the configuration in the configuration information, with the indication value therein changed to 1; if uplink data of even higher priority level arrives or a new BSR is triggered before the user equipment receives an uplink grant in response to the re-sent scheduling request, the user equipment re-sends the scheduling request according to the configuration in the configuration information, with the indication value therein changed to 0. That process goes on in the same way. After obtaining the scheduling request, the base station may schedule the corresponding user equipment first.

To prevent discarding of the scheduling request sent by the user equipment, the user equipment may send the scheduling request repeatedly when the indication value is changed, for example, send the same scheduling request for at least two times before sending a new scheduling request, where the number of times of sending the scheduling request may be set in the user equipment or configured through the configuration information sent by the base station.

It should be noted that when the base station allocates uplink resources, the base station not only considers the fourth indication value in the scheduling request, but may also consider the actual conditions of the user equipment corresponding to the scheduling request received by the base station, for example, a QoS attribute of the service created by the user equipment, load of the cell, channel conditions of the user equipment, and so on, and then determines the user equipment for which the uplink resources will be allocated first.

In other specific embodiments, when the base station sends the configuration information to the user equipment, the configuration information includes information such as attributes of the buffered uplink data to be indicated in the scheduling request, and the PUCCH format to be used for sending the scheduling request; when the user equipment wants to send the scheduling request, the user equipment sends it in the mode configured by the configuration information.

Different formats of the PUCCH have different functions: Format 1 is used to send an SR; format 1a is used to send one bit of feedback information; format 1b is used to send two bits of feedback information (respectively indicating whether two simultaneously sent downlink data blocks are received successfully); format 2, format 2a, and format 2b are used to feed back information such as downlink channel quality. If the base station configures that the user equipment uses format 1a/1b/2/2a/2b to send the scheduling request, it is possible that the scheduling request sent by the user equipment conflicts with the sent hybrid auto retransmission request (HARQ) feedback, that is, the scheduling request and the HARQ feedback message need to be sent on the same subframe. To ensure information transmission quality, the user equipment needs to determine whether the scheduling request conflicts with the feedback message when the scheduling request is sent by using such formats. If conflict occurs, the user equipment sends the scheduling request according to an existing scheme. If no conflict occurs, that is, not transmitted on the same subframe, the user equipment sends the scheduling request according to the mode configured in the configuration information. Because the base station knows when the user equipment sends the HARQ feedback and when the user equipment reports channel quality information, the base station can correctly understand the meaning of information sent by the user equipment even if the scheduling request conflicts with the feedback message.

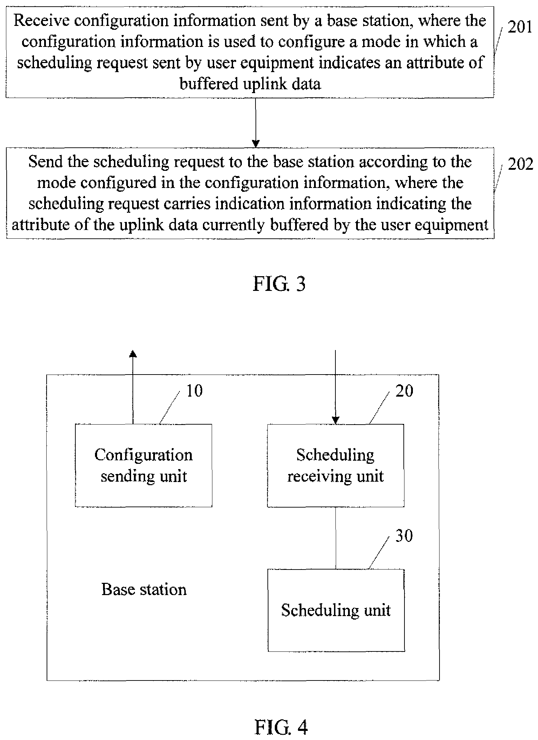

Further, an embodiment of the present invention provides another uplink scheduling method. The method in this embodiment is performed by user equipment. As shown in FIG 3, the method includes the following steps:
Step 201: Receive configuration information sent by a base station, where the configuration information is used to configure a mode in which a scheduling request sent by a user equipment indicates an attribute of buffered uplink data.

Understandably, the base station may send configuration information through a message such as an RRC message or a broadcast message; and the modes in which the scheduling request indicates the attribute of the buffered uplink data, as configured in the configuration information, may include: in the scheduling request, a set indication value is used to indicate one or more pieces of the following information: the amount of uplink data buffered by the user equipment; a priority level of a logical channel carrying the uplink data buffered by the user equipment; a type of the logical channel carrying the uplink data buffered by the user equipment; arrival of uplink data whose priority level is higher than the priority level of the uplink data that has already triggered a buffer status report or triggering of a new buffer status report on the user equipment in a period from the user equipment's sending the scheduling request to receiving a corresponding uplink grant.

The configuration information may further configure information such as format of the physical uplink control channel used by the user equipment for sending the scheduling request, and the number of times of sending the scheduling request.

Step 202: Send the scheduling request to the base station according to the mode configured by the configuration information, where the scheduling request carries indication information indicating the attribute of the uplink data buffered by the user equipment so that the base station allocates an uplink resource to the user equipment according to the indication information carried in the scheduling request.

Therefore, when sending the scheduling request, the user equipment may, according to the mode configured in the configuration information, determine the attribute information of the uplink data that needs to be sent and is buffered by the user equipment, and use the set indication value to indicate such attribute information, with the indication value being carried in the scheduling request to the base station. For example, the user equipment may use a set indication value to indicate the amount of uplink data buffered by the user equipment, or indicate the priority level of the logical channel carrying the buffered uplink data, or indicate the type of the logical channel carrying the buffered uplink data.

If the configuration information includes the format of the physical uplink control channel used by the user equipment for sending the scheduling request, the user equipment may use the format configured in the configuration information to send the scheduling request; if the configuration information includes no format information, the user equipment may use a default format to send the scheduling request, where the default format may be set in the protocol fixedly, and the consistency between the user equipment and the base station can also be achieved by other means.

In the embodiment of the present invention, user equipment receives configuration information sent by a base station, where the configuration information is used to configure a mode in which a scheduling request sent by the user equipment indicates an attribute of buffered uplink data; the scheduling request may be sent according to the mode configured in the configuration information, and the indication information in the scheduling request indicates the attribute information of uplink data. In this way, when the user equipment sends the scheduling request, the scheduling request may indicate that there is uplink data that needs to be sent, and may also indicate specific attribute information of the uplink data to be sent. Therefore, after receiving the scheduling request, the base station can allocate the uplink resource, that is, perform uplink data scheduling timely and accurately according to the information on the uplink data that needs to be sent by the user equipment. Accordingly the base station can schedule the uplink data of the user equipment timely and accurately, and the performance of scheduling the uplink data is improved.

An embodiment of the present invention provides a base station, whose structure is shown in FIG. 4. The base station includes a configuration sending unit 10, a scheduling receiving unit 20 and a scheduling unit 30.

The configuration sending unit 10 is configured to send configuration information to a user equipment, where the configuration information is used to configure a mode in which a scheduling request sent by the user equipment indicates an attribute of buffered uplink data.

The modes in which the scheduling request indicates the attribute of the buffered uplink data, as configured in the configuration information, may include: in the scheduling request, a set indication value is used to indicate one or more pieces of the following information: the amount of uplink data buffered by the user equipment; a priority level of a logical channel carrying the uplink data buffered by the user equipment; a type of the logical channel carrying the uplink data buffered by the user equipment; arrival of uplink data whose priority level of the arrived uplink data is higher than the priority level of the uplink data that has already triggered a buffer status report or triggering of a new buffer status report on the user equipment in a period from the user equipment's sending the scheduling request to receiving a corresponding uplink grant.

The parameters such as format of the physical uplink control channel used by the user equipment for sending the scheduling request, and the number of times of sending the scheduling request may further be configured in the configuration information.

The scheduling receiving unit 20 is configured to receive the scheduling request sent by the user equipment according to the configuration information sent by the configuration sending unit 10, where the scheduling request carries indication information indicating the attribute of the uplink data buffered by the user equipment.

The scheduling unit 30 is configured to allocate an uplink resource to the user equipment according to the indication information carried in the scheduling request received by the scheduling receiving unit 20.

In the base station according to the embodiment of the present invention, the configuration information is notified to a user equipment by the configuration sending unit 10, where the configuration information is used to configure the mode in which a scheduling request sent by the user equipment indicates the attribute of buffered uplink data; when the scheduling receiving unit 20 receives the scheduling request that is sent by the user equipment according to the configuration information, the scheduling unit 30 allocates an uplink resource to the user equipment according to the indication information carried in the scheduling request. In this way, when the user equipment sends the scheduling request, the scheduling request may indicate that there is uplink data that needs to be sent, and may also indicate specific attribute information of the uplink data to be sent, so that the base station can allocate the uplink resource, that is, perform uplink data scheduling timely and accurately according to the information on the uplink data that needs to be sent by the user equipment. Consequently the base station can schedule the uplink data of the user equipment timely and accurately, and the performance of scheduling the uplink data is improved.

As shown in FIG 4, in a specific embodiment, the scheduling unit 30 of the base station in the embodiment specifically includes a data amount allocating unit 301, configured to allocate to the user equipment the uplink resource corresponding to the amount of uplink data indicated by a first indication value in the scheduling request received by the scheduling receiving unit, where the first indication value is used to indicate the amount of uplink data buffered by the user equipment.

In the embodiment, if the configuration information sent by the configuration sending unit 10 includes a first configuration item that is used to configure a first indication value of the scheduling request, the scheduling request received by the scheduling receiving unit 20 carries the first indication value, and the data amount allocating unit 301 allocates to the user equipment the uplink resource corresponding to the amount of uplink data indicated by the first indication value.

In another specific embodiment, the scheduling unit 30 of the base station specifically includes a first allocation postponing unit 302 and/or a first allocation advancing unit 303.

The first allocation postponing unit 302 is configured to determine that the priority level of the logical channel carrying the uplink data buffered by the user equipment is lower than a set value, where the priority level is indicated by the second indication value carried in the scheduling request received by the scheduling receiving unit 20, and postpone allocating the uplink resource to the user equipment for first duration, where the second indication value is used to indicate the priority level of the logical channel carrying the uplink data buffered by the user equipment.

The first allocation advancing unit 303 is configured to determine that the priority level of the logical channel carrying the uplink data buffered by the user equipment is equal to or higher than the set value, where the priority level is indicated by the second indication value, and bring forward allocating the uplink resource to the user equipment by second duration.

In the embodiment, if the configuration information sent by the configuration sending unit 10 includes a second configuration item that is used to configure a second indication value of the scheduling request, the scheduling request received by the scheduling receiving unit 20 carries the second indication value, the first allocation postponing unit 302 postpones allocating the uplink resource to the user equipment for the first duration, and the first allocation advancing unit 303 brings forward allocating the uplink resource to the user equipment by the second duration.

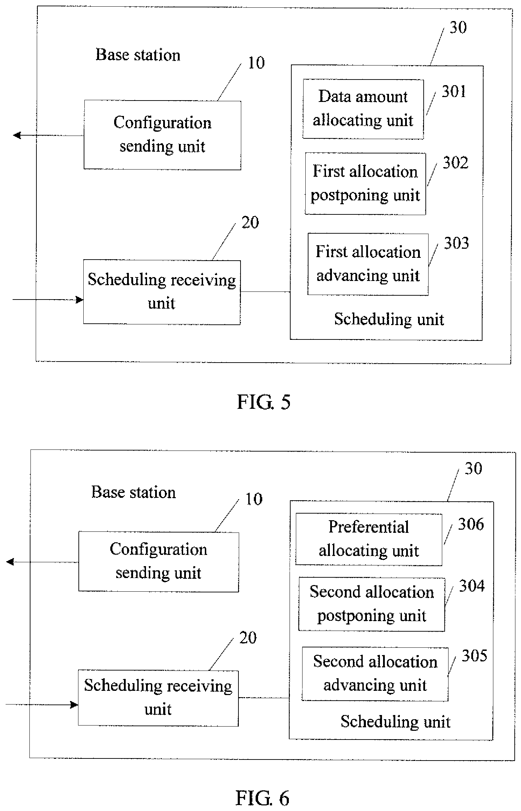

As shown in FIG. 6, in other specific embodiments, the scheduling unit 30 of the base station may include a second allocation postponing unit 304 and/or a second allocation advancing unit 305.

The second allocation postponing unit 304 is configured to determine that the type of the logical channel carrying the uplink data buffered by the user equipment is data radio bearer DRB, where the type is indicated by the third indication value carried in the scheduling request received by the scheduling receiving unit 20, and postpone allocating the uplink resource to the user equipment for third duration, where the third indication value is used to indicate whether the type of the logical channel carrying the uplink data buffered by the user equipment is data radio bearer DRB or signaling radio bearer SRB.

The second allocation advancing unit 305 is configured to determine that the type of the logical channel carrying the uplink data buffered by the user equipment is the signaling radio bearer SRB, where the type is indicated by the third indication value, and bring forward allocating the uplink resources to the user equipment by fourth duration.

In the embodiment, if the configuration information sent by the configuration sending unit 10 includes a third configuration item that is used to configure a third indication value of the scheduling request, the scheduling request received by the scheduling receiving unit 20 carries the third indication value, the second allocation postponing unit 304 postpones allocating the uplink resource to the user equipment for the third duration, and the second allocation advancing unit 305 brings forward allocating the uplink resource to the user equipment by the fourth duration.

A preferential allocating unit 306 is configured to preferentially allocate uplink resources to the user equipment corresponding to the scheduling request that carries a changed fourth indication value, when the fourth indication value which is carried in the scheduling request received by the scheduling receiving unit 20 has changed compared to the fourth indication value in a previously sent scheduling request, where the fourth indication value is used to indicate the arrival of uplink data or triggering of a new buffer status report on the user equipment in a period from the user equipment's sending a previous scheduling request to receiving a corresponding uplink grant, where the priority level of the arrived uplink data is higher than the priority level of the uplink data that has already triggered a buffer status report.

If the configuration information sent by the configuration sending unit 10 includes a fourth configuration item that is used to configure a fourth indication value of the scheduling request, the scheduling request received by the scheduling receiving unit 20 carries the fourth indication value, and the preferential allocating unit 306 preferentially allocates the uplink resource to the user equipment corresponding to the scheduling request that carries a changed fourth indication value.

For description about the functions and the structure of the base station in the embodiment, the foregoing method embodiment may be referenced.

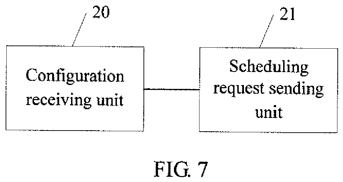

Further, an embodiment of the present invention provides a user equipment, whose structure is shown in FIG. 7. The user equipment includes:
a configuration receiving unit 20, configured to receive configuration information sent by a base station, where the configuration information is used to configure a mode in which a scheduling request sent by a user equipment indicates an attribute of buffered uplink data; and
a scheduling request sending unit 21, configured to send a scheduling request to the base station according to the mode configured by the configuration information received by the configuration receiving unit 20, where the scheduling request carries indication information indicating the attribute of the uplink data buffered by the user equipment so that the base station allocates the uplink resource to the user equipment according to the indication information carried in the scheduling request.

In the user equipment in the embodiment of the present invention, a configuration receiving unit 20 receives configuration information sent by a base station, where the configuration information is used to configure a mode in which a scheduling request sent by the user equipment indicates the attribute of buffered uplink data; a scheduling request sending unit 21 may send the scheduling request according to the configuration information, and use indication information in the scheduling request to indicate the attribute information of uplink data. In this way, when the user equipment sends the scheduling request, the scheduling request may indicate that there is uplink data that needs to be sent, and may also indicate specific attribute information of the uplink data. Therefore, after receiving the scheduling request, the base station can allocate the uplink resource, that is, perform uplink data scheduling timely and accurately according to the information on the uplink data that needs to be sent by the user equipment. Consequently the base station can schedule the uplink data of the user equipment timely and accurately, and the performance of scheduling the uplink data is improved.

For description about the structure and the functions of the user equipment in the embodiment, the foregoing method embodiment may be referenced.

Further, an embodiment of the present invention provides a system for scheduling uplink data. The system includes user equipment and a base station, where the structure of the base station is shown in any one of FIG 4 to 6, and the structure of the user equipment is shown in FIG 7.

In the system for scheduling uplink data, the base station and the user equipment perform uplink data scheduling for the user equipment according to the method shown in FIG 2 and 3.

Persons of ordinary skill in the art should understand that all or part of the steps of the method in the embodiments of the present invention may be implemented by a program instructing relevant hardware. The program may be stored in computer readable storage media. The storage media may be a read-only memory (ROM), a random access memory (RAM), a magnetic disk, or a CD-ROM.

## Claims

1. A method for scheduling uplink data, comprising:
sending (101) configuration information to a user equipment, wherein the configuration information is used to configure a mode in which a scheduling request sent by the user equipment indicates an attribute of uplink data buffered by the user equipment, wherein the attribute of the uplink data buffered by the user equipment comprises at least one of: a range of an amount of the uplink data buffered by the user equipment, a range of a priority level of a logical channel carrying the uplink data buffered by the user equipment, and a type of the logical channel carrying the uplink data buffered by the user equipment;
receiving (102) the scheduling request sent by the user equipment according to the configuration information, wherein the scheduling request carries indication information indicating the attribute of the uplink data buffered by the user equipment; and
allocating (103) an uplink resource to the user equipment according to the indication information carried in the scheduling request.

2. The method according to claim 1, wherein the mode in which the scheduling request sent by user equipment indicates the attribute of the uplink data buffered by the user equipment further comprises:
a format of a physical uplink control channel used by the user equipment for sending the scheduling request.

3. The method according to claim 1 or 2, wherein:
the configuration information comprises a first configuration item, the first configuration item is used to configure a first indication value of the scheduling request, and the first indication value is used to indicate the range of the amount of uplink data buffered by the user equipment;
the scheduling request carries the first indication value; and
the allocating the uplink resource to the user equipment according to the indication information carried in the scheduling request comprises:
allocating to the user equipment the uplink resource corresponding to the range of the amount of uplink data indicated by the first indication value.

4. The method according to claim 1 or 2, wherein:
the configuration information comprises a second configuration item, the second configuration item is used to configure a second indication value of the scheduling request, and the second indication value is used to indicate the range of the priority level of a logical channel carrying the uplink data buffered by the user equipment;
the scheduling request carries the second indication value;
the allocating the uplink resource to the user equipment according to the indication information carried in the scheduling request comprises:
determining that the range of the priority level of the logical channel carrying the uplink data buffered by the user equipment is lower than a set value, wherein the range of the priority level is indicated by the second indication value, and postponing allocating the uplink resource to the user equipment for first duration; or
determining that the range of the priority level of the logical channel carrying the uplink data buffered by the user equipment is equal to or higher than the set value, wherein the range of the priority level is indicated by the second indication value, and bringing forward allocating the uplink resource to the user equipment by second duration.

5. The method according to claim 1 or 2, wherein:
the configuration information comprises a third configuration item, the third configuration item is used to configure a third indication value of the scheduling request, and the third indication value is used to indicate whether the type of the logical channel carrying the uplink data buffered by the user equipment is a data radio bearer DRB or a signaling radio bearer SRB;
the scheduling request carries the third indication value;
the allocating the uplink resource to the user equipment according to the indication information carried in the scheduling request comprises:
postponing allocating the uplink resource to the user equipment for third duration when the type of the logical channel carrying the uplink data buffered by the user equipment is the data radio bearer DRB, wherein the type is indicated by the third indication value; or
bringing forward allocating the uplink resource to the user equipment by fourth duration when the type of the logical channel carrying the uplink data buffered by the user equipment is the signaling radio bearer SRB, wherein the type is indicated by the third indication value.

6. The method according to claim 1 or 2, wherein:
the configuration information comprises a fourth configuration item, the fourth configuration item is used to configure a fourth indication value of the scheduling request, and the fourth indication value is used to indicate arrival of uplink data whose priority level is higher than the priority level of the uplink data that has already triggered a buffer status report or triggering of a new buffer status report on the user equipment in a period from the user equipment's sending a previous scheduling request to receiving a corresponding uplink grant;
the scheduling request carries the fourth indication value;
the allocating the uplink resource to the user equipment according to the indication information carried in the scheduling request comprises:
when the fourth indication value in the scheduling request has changed compared to the fourth indication value in a previously sent scheduling request, allocating the uplink resource preferentially to the user equipment corresponding to the scheduling request that carries the changed fourth indication value.

7. The method according to claim 1 or 2, wherein:
the scheduling request sent by the user equipment according to the configuration information comprise:
the scheduling request sent by the user equipment when the scheduling request sent by the user equipment according to the mode configured by the configuration information and a hybrid auto retransmission request HARQ feedback sent by the user equipment are not transmitted on the same subframe.

8. The method according to claim 1 or 2, wherein:
the sending the configuration information to the user equipment comprises:
sending the configuration information to the user equipment through carrying the configuration information in a radio resource control connection setup message, or a radio resource control connection reconfiguration message, or a radio resource control connection reestablishment message, or a broadcast message.

9. An uplink scheduling method, comprising:
receiving (201) configuration information sent by a base station, wherein the configuration information is used to configure a mode in which a scheduling request sent by a user equipment indicates an attribute of uplink data buffered by the user equipment, wherein the attribute of the uplink data buffered by the user equipment comprises at least one of: a range of an amount of the uplink data buffered by the user equipment, a range of a priority level of a logical channel carrying the uplink data buffered by the user equipment, and a type of the logical channel carrying the uplink data buffered by the user equipment; and
sending (202) the scheduling request to the base station according to the mode configured by the configuration information, wherein the scheduling request carries indication information indicating the attribute of the uplink data buffered by the user equipment so that the base station allocates an uplink resource to the user equipment according to the indication information carried in the scheduling request.

10. The method according to claim 9, wherein:
the configuration information comprises a format of a physical uplink control channel used by the user equipment for sending the scheduling request;
the sending the scheduling request to the base station comprises:
sending the scheduling request to the base station according to the format of the physical uplink control channel used by the user equipment for sending the scheduling request, wherein the format is comprised in the configuration information.

11. A base station, comprising:
a configuration sending unit (10), configured to send configuration information to a user equipment, wherein the configuration information is used to configure a mode in which a scheduling request sent by the user equipment indicates an attribute of uplink data buffered by the user equipment, wherein the attribute of the uplink data buffered by the user equipment comprises at least one of: a range of an amount of the uplink data buffered by the user equipment, a range of a priority level of a logical channel carrying the uplink data buffered by the user equipment, and a type of the logical channel carrying the uplink data buffered by the user equipment;
a scheduling receiving unit (20), configured to receive the scheduling request sent by the user equipment according to the configuration information sent by the configuration sending unit, wherein the scheduling request carries indication information indicating the attribute of the uplink data buffered by the user equipment; and
a scheduling unit (30), configured to allocate an uplink resource to the user equipment according to the indication information carried in the scheduling request received by the scheduling receiving unit (20).

12. The base station according to claim 11, wherein:
the scheduling unit (30) comprises a data amount allocating unit (301);
the configuration sending unit (10) is specifically configured to send configuration information to the user equipment, wherein the configuration information comprises a first configuration item, the first configuration item is used to configure a first indication value of the scheduling request, and the first indication value is used to indicate the range of the amount of the uplink data buffered by the user equipment;
the scheduling receiving unit (20) is specifically configured to receive the scheduling request sent by the user equipment according to the configuration information sent by the configuration sending unit, wherein the scheduling request carries the first indication value; and
the data amount allocating unit (301) is configured to allocate to the user equipment an uplink resource corresponding to the amount of the uplink data indicated by the first indication value received by the scheduling receiving unit.

13. The base station according to claim 11, wherein:
the scheduling unit comprises a first allocation postponing unit (302) and/or a first allocation advancing unit (303);
the configuration sending unit (10) is specifically configured to send configuration information to the user equipment, wherein the configuration information comprises a second configuration item, the second configuration item is used to configure a second indication value of the scheduling request, and the second indication value is used to indicate the range of the priority level of a logical channel carrying the uplink data buffered by the user equipment;
the scheduling receiving unit (20) is specifically configured to receive the scheduling request sent by the user equipment according to the configuration information sent by the configuration sending unit, wherein the scheduling request carries the second indication value;
the first allocation postponing unit (302) is configured to determine that the range of the priority level of the logical channel carrying the uplink data buffered by the user equipment is lower than a set value, wherein the range of the priority level is indicated by the second indication value carried in the scheduling request received by the scheduling receiving unit, and postpone allocating the uplink resource to the user equipment for first duration; and/or
the first allocation advancing unit (303) is configured to determine that the range of the priority level of the logical channel carrying the uplink data buffered by the user equipment is equal to or higher than the set value, wherein the range of the priority level is indicated by the second indication value, and bring forward allocating the uplink resource to the user equipment by second duration.

14. The base station according to claim 11, wherein:
the scheduling unit (30) specifically comprises a second allocation postponing unit (304) and/or a second allocation advancing unit (305);
the configuration sending unit (10) is specifically configured to send configuration information to the user equipment, wherein the configuration information comprises a third configuration item, the third configuration item is used to configure a third indication value of the scheduling request, and the third indication value is used to indicate whether the type of a logical channel carrying the uplink data buffered by the user equipment is a data radio bearer DRB or a signaling radio bearer SRB;
the scheduling receiving unit (20) is specifically configured to receive the scheduling request sent by the user equipment according to the configuration information sent by the configuration sending unit, wherein the scheduling request carries the third indication value;
the second allocation postponing unit (304) is configured to determine that the type of the logical channel carrying the uplink data buffered by the user equipment is the data radio bearer DRB, wherein the priority level is indicated by the third indication value carried in the scheduling request received by the scheduling receiving unit, postpone allocating the uplink resource to the user equipment for third duration; and/or
the second allocation advancing unit (305) is configured to determine that the type of the logical channel carrying the uplink data buffered by the user equipment is the signaling radio bearer SRB, wherein the type is indicated by the third indication value, bring forward allocating the uplink resource to the user equipment by fourth duration.

15. The base station according to claim 11, wherein:
the scheduling unit (30) comprises a preferential allocating unit (306);
the configuration sending unit (10) is specifically configured to send configuration information to the user equipment, wherein the configuration information comprises a fourth configuration item, the fourth configuration item is used to configure a fourth indication value of the scheduling request, and the fourth indication value is used to indicate arrival of uplink data whose priority level is higher than the priority level of the uplink data that has already triggered a buffer status report or triggering of a new buffer status report on the user equipment in a period from the user equipment's sending a previous scheduling request to receiving a corresponding uplink grant;
the scheduling receiving unit (20) is specifically configured to receive the scheduling request sent by the user equipment according to the configuration information sent by the configuration sending unit, wherein the scheduling request carries the fourth indication value; and
the preferential allocating unit (306) is configured to preferentially allocate the uplink resource to the user equipment corresponding to the scheduling request that carries a changed fourth indication value when the fourth indication value in the scheduling request received by the scheduling receiving unit has changed compared to the fourth indication value in a previously sent scheduling request.

16. A user equipment, comprising:
a configuration receiving unit (20), configured to receive configuration information sent by a base station, wherein the configuration information is used to configure a mode in which a scheduling request sent by a user equipment indicates an attribute of uplink data buffered by the user equipment, wherein the attribute of the uplink data buffered by the user equipment comprises at least one of: a range of an amount of the uplink data buffered by the user equipment, a priority level of a logical channel carrying the uplink data buffered by the user equipment, and a type of the logical channel carrying the uplink data buffered by the user equipment; and
a scheduling request sending unit (21), configured to send the scheduling request to the base station according to the mode configured by the configuration information received by the configuration receiving unit (20), wherein the scheduling request carries indication information indicating the attribute of the uplink data buffered by the user equipment so that the base station allocates an uplink resource to the user equipment according to the indication information carried in the scheduling request.

## Patentansprüche

1. Verfahren zur Zeitplanung von Uplink-Daten, umfassend:
Senden (101) einer Konfigurationsinformation an ein Benutzergerät, wobei die Konfigurationsinformation zum Konfigurieren eines Modus verwendet wird, in dem eine vom Benutzergerät gesendete Zeitplanungsanforderung ein Attribut von Uplink-Daten anzeigt, die von dem Benutzergerät zwischengespeichert werden, wobei das Attribut der von dem Benutzergerät zwischengespeicherten Uplink-Daten mindestens eines der Folgenden umfasst: einen Bereich einer Menge der von dem Benutzergerät zwischengespeicherten Uplink-Daten, einen Bereich einer Prioritätsstufe eines logischen Kanals, der die von dem Benutzergerät zwischengespeicherten Uplink-Daten übermittelt, und einen Typ des logischen Kanals, der die von dem Benutzergerät zwischengespeicherten Uplink-Daten übermittelt;
Empfangen (102) der von dem Benutzergerät gemäß der Konfigurationsinformation gesendeten Zeitplanungsanforderung, wobei die Zeitplanungsanforderung eine Anzeigeinformation übermittelt, die das Attribut der von dem Benutzergerät zwischengespeicherten Uplink-Daten anzeigt; und
Zuweisen (103) einer Uplink-Ressource zu dem Benutzergerät gemäß der in der Zeitplanungsanforderung übermittelten Anzeigeinformation.

2. Verfahren nach Anspruch 1, wobei der Modus, in dem die von dem Benutzergerät gesendete Zeitplanungsanforderung das Attribut der von dem Benutzergerät zwischengespeicherten Uplink-Daten anzeigt, ferner umfasst:
ein Format eines physischen Uplink-Steuerkanals, der von dem Benutzergerät zum Senden der Zeitplanungsanforderung verwendet wird.

3. Verfahren nach Anspruch 1 oder 2, wobei:
die Konfigurationsinformation ein erstes Konfigurationselement umfasst, das erste Konfigurationselement verwendet wird, um einen ersten Anzeigewert der Zeitplanungsanforderung zu konfigurieren, und der erste Anzeigewert verwendet wird, um den Bereich der Menge von Uplink-Daten anzuzeigen, die von dem Benutzergerät zwischengespeichert werden;
die Zeitplanungsanforderung den ersten Anzeigewert übermittelt; und
das Zuweisen der Uplink-Ressource zu dem Benutzergerät gemäß der in der Zeitplanungsanforderung übermittelten Anzeigeinformation umfasst:
Zuweisen zu dem Benutzergerät der Uplink-Ressource, die dem Bereich der Menge von Uplink-Daten entspricht, der durch den ersten Anzeigewert angezeigt wird.

4. Verfahren nach Anspruch 1 oder 2, wobei:
die Konfigurationsinformation ein zweites Konfigurationselement umfasst, das zweite Konfigurationselement verwendet wird, um einen zweiten Anzeigewert der Zeitplanungsanforderung zu konfigurieren, und der zweite Anzeigewert verwendet wird, um den Bereich der Prioritätsstufe eines logischen Kanals anzuzeigen, der die von dem Benutzergerät zwischengespeicherten Uplink-Daten übermittelt;
die Zeitplanungsanforderung den zweiten Anzeigewert übermittelt;
das Zuweisen der Uplink-Ressource zu dem Benutzergerät gemäß der in der Zeitplanungsanforderung übermittelten Anzeigeinformation umfasst:
Bestimmen, dass der Bereich der Prioritätsstufe des logischen Kanals, der die von dem Benutzergerät zwischengespeicherten Uplink-Daten übermittelt, niedriger als ein eingestellter Wert ist, wobei der Bereich der Prioritätsstufe durch den zweiten Anzeigewert angezeigt wird, und Verschieben des Zuweisens der Uplink-Ressource zu dem Benutzergerät für eine erste Dauer; oder
Bestimmen, dass der Bereich der Prioritätsstufe des logischen Kanals, der die von dem Benutzergerät zwischengespeicherten Uplink-Daten übermittelt, gleich oder höher als der eingestellte Wert ist, wobei der Bereich der Prioritätsstufe durch den zweiten Anzeigewert angezeigt wird, und Vorverlegen des Zuweisens der Uplink-Ressource zu dem Benutzergerät für eine zweite Dauer.

5. Verfahren nach Anspruch 1 oder 2, wobei:
die Konfigurationsinformation ein drittes Konfigurationselement umfasst, das dritte Konfigurationselement verwendet wird, um einen dritten Anzeigewert der Zeitplanungsanforderung zu konfigurieren, und der dritte Anzeigewert verwendet wird, um anzuzeigen, ob der Typ des logischen Kanals, der die von dem Benutzergerät zwischengespeicherten Uplink-Daten übermittelt, ein Datenfunkträger (Data Radio Bearer, DRB) oder ein Signalisierungsfunkträger (Signaling Radio Bearer, SRB) ist;
die Zeitplanungsanforderung den dritten Anzeigewert übermittelt;
das Zuweisen der Uplink-Ressource zu dem Benutzergerät gemäß der in der Zeitplanungsanforderung übermittelten Anzeigeinformation umfasst:
Verschieben des Zuweisens der Uplink-Ressource zu dem Benutzergerät für eine dritte Dauer, wenn der Typ des logischen Kanals, der die von dem Benutzergerät zwischengespeicherten Uplink-Daten übermittelt, der Datenfunkträger (DRB) ist, wobei der Typ durch den dritten Anzeigewert angezeigt wird; oder
Vorverlegen des Zuweisens der Uplink-Ressource zu dem Benutzergerät für eine vierte Dauer, wenn der Typ des logischen Kanals, der die von dem Benutzergerät zwischengespeicherten Uplink-Daten übermittelt, der Signalisierungsfunkträger (SRB) ist, wobei der Typ durch den dritten Anzeigewert angezeigt wird.

6. Verfahren nach Anspruch 1 oder 2, wobei:
die Konfigurationsinformation ein viertes Konfigurationselement umfasst, das vierte Konfigurationselement verwendet wird, um einen vierten Anzeigewert der Zeitplanungsanforderung zu konfigurieren, und der vierte Anzeigewert verwendet wird, um die Ankunft von Uplink-Daten anzuzeigen, deren Prioritätsstufe höher als die Prioritätsstufe der Uplink-Daten ist, die bereits einen Pufferstatusbericht ausgelöst haben oder einen neuen Pufferstatusberichts auf dem Benutzergerät in einem Zeitraum von dem Senden einer vorherigen Zeitplanungsanforderung durch das Benutzergerät bis zum Empfangen einer entsprechenden Uplink-Genehmigung auslösen;
die Zeitplanungsanforderung den vierten Anzeigewert übermittelt;
das Zuweisen der Uplink-Ressource zu dem Benutzergerät gemäß der in der Zeitplanungsanforderung übermittelten Anzeigeinformation umfasst:
wenn sich der vierte Anzeigewert in der Zeitplanungsanforderung im Vergleich zum vierten Anzeigewert in einer zuvor gesendeten Zeitplanungsanforderung geändert hat, Zuweisen der Uplink-Ressource vorzugsweise zu einem Benutzergerät, das der Zeitplanungsanforderung entspricht, die den geänderten vierten Anzeigewert übermittelt.

7. Verfahren nach Anspruch 1 oder 2, wobei:
die von dem Benutzergerät gemäß der Konfigurationsinformation gesendete Zeitplanungsanforderung umfasst:
die von dem Benutzergerät gesendete Zeitplanungsanforderung, wenn die von dem Benutzergerät gemäß dem durch die Konfigurationsinformation konfigurierten Modus gesendete Zeitplanungsanforderung und eine von dem Benutzergerät gesendete hybride Auto-Neuübertragungsanforderungs(Hybrid Auto Retransmission Request, HARQ)-Rückmeldung nicht auf demselben Teilrahmen übertragen werden.

8. Verfahren nach Anspruch 1 oder 2, wobei:
das Senden der Konfigurationsinformation an das Benutzergerät umfasst:
Senden der Konfigurationsinformation an das Benutzergerät durch Übermitteln der Konfigurationsinformation in einer Funkressourcensteuerungs-Verbindungsaufbaunachricht oder einer Funkressourcensteuerungs-Verbindungsneukonfigurationsnachricht oder einer Funkressourcensteuerungs-Verbindungswiederherstellungsnachricht oder einer Rundsendenachricht.

9. Verfahren zur Uplink-Zeitplanung, umfassend:
Empfangen (201) einer von einer Basisstation gesendeten Konfigurationsinformation, wobei die Konfigurationsinformation zum Konfigurieren eines Modus verwendet wird, in dem eine von einem Benutzergerät gesendete Zeitplanungsanforderung ein Attribut von Uplink-Daten anzeigt, die von dem Benutzergerät zwischengespeichert werden, wobei das Attribut der von dem Benutzergerät zwischengespeicherten Uplink-Daten mindestens eines der Folgenden umfasst: einen Bereich einer Menge der von dem Benutzergerät zwischengespeicherten Uplink-Daten, einen Bereich einer Prioritätsstufe eines logischen Kanals, der die von dem Benutzergerät zwischengespeicherten Uplink-Daten übermittelt, und einen Typ des logischen Kanals, der die von dem Benutzergerät zwischengespeicherten Uplink-Daten übermittelt; und
Senden (202) der Zeitplanungsanforderung an die Basisstation gemäß dem durch die Konfigurationsinformation konfigurierten Modus, wobei die Zeitplanungsanforderung eine Anzeigeinformation übermittelt, die das Attribut der von dem Benutzergerät zwischengespeicherten Uplink-Daten anzeigt, sodass die Basisstation dem Benutzergerät eine Uplink-Ressource gemäß der in der Zeitplanungsanforderung übermittelten Anzeigeinformation zuweist.

10. Verfahren nach Anspruch 9, wobei:
die Konfigurationsinformation ein Format eines physischen Uplink-Steuerkanals umfasst, der von dem Benutzergerät zum Senden der Zeitplanungsanforderung verwendet wird;
das Senden der Zeitplanungsanforderung an die Basisstation umfasst:
Senden der Zeitplanungsanforderung an die Basisstation gemäß dem Format des physischen Uplink-Steuerkanals, der von dem Benutzergerät zum Senden der Zeitplanungsanforderung verwendet wird, wobei die Konfigurationsinformation das Format umfasst.

11. Basisstation, umfassend:
eine Konfigurationssendeeinheit (10), die konfiguriert ist, um eine Konfigurationsinformation an ein Benutzergerät zu senden, wobei die Konfigurationsinformation zum Konfigurieren eines Modus verwendet wird, in dem eine vom Benutzergerät gesendete Zeitplanungsanforderung ein Attribut von Uplink-Daten anzeigt, die von dem Benutzergerät zwischengespeichert werden, wobei das Attribut der von dem Benutzergerät zwischengespeicherten Uplink-Daten mindestens eines der Folgenden umfasst: einen Bereich einer Menge der von dem Benutzergerät zwischengespeicherten Uplink-Daten, einen Bereich einer Prioritätsstufe eines logischen Kanals, der die von dem Benutzergerät zwischengespeicherten Uplink-Daten übermittelt, und einen Typ des logischen Kanals, der die von dem Benutzergerät zwischengespeicherten. Uplink-Daten übermittelt;
eine Zeitplanungsempfangseinheit (20), die konfiguriert ist, um die Zeitplanungsanforderung zu empfangen, die von dem Benutzergerät gemäß der von der Konfigurationssendeeinheit gesendeten Konfigurationsinformation gesendet wird, wobei die Zeitplanungsanforderung eine Anzeigeinformation übermittelt, die das Attribut der von dem Benutzergerät zwischengespeicherten Uplink-Daten anzeigt; und
eine Zeitplanungseinheit (30), die konfiguriert ist, um dem Benutzergerät eine Uplink-Ressource gemäß der Anzeigeinformation zuzuweisen, die in der von der Zeitplanungsempfangseinheit (20) empfangenen Zeitplanungsanforderung übermittelt wird.

12. Basisstation nach Anspruch 11, wobei:
die Zeitplanungseinheit (30) eine Datenmengenzuweisungseinheit (301) umfasst;
die Konfigurationssendeeinheit (10) insbesondere konfiguriert ist, um die Konfigurationsinformation an das Benutzergerät zu senden, wobei die Konfigurationsinformation ein erstes Konfigurationselement umfasst, das erste Konfigurationselement verwendet wird, um einen ersten Anzeigewert der Zeitplanungsanforderung zu konfigurieren, und der erste Anzeigewert verwendet wird, um den Bereich der Menge von Uplink-Daten anzuzeigen, die von dem Benutzergerät zwischengespeichert werden;
die Zeitplanungsempfangseinheit (20) insbesondere konfiguriert ist, um die Zeitplanungsanforderung zu empfangen, die von dem Benutzergerät gemäß der von der Konfigurationssendeeinheit gesendeten Konfigurationsinformation gesendet wird, wobei die Zeitplanungsanforderung den ersten Anzeigewert übermittelt; und
die Datenmengenzuweisungseinheit (301) konfiguriert ist, um dem Benutzergerät eine Uplink-Ressource zuzuweisen, die der Menge der Uplink-Daten entspricht, die durch den ersten Anzeigewert angezeigt wird, der von der Zeitplanungsempfangseinheit empfangen wird.

13. Basisstation nach Anspruch 11, wobei:
die Zeitplanungseinheit eine erste Zuweisungsverschiebungseinheit (302) und/oder eine erste Zuweisungsvorverlegungseinheit (303) umfasst;
die Konfigurationssendeeinheit (10) insbesondere konfiguriert ist, um die Konfigurationsinformation an das Benutzergerät zu senden, wobei die Konfigurationsinformation ein zweites Konfigurationselement umfasst, das zweite Konfigurationselement verwendet wird, um einen zweiten Anzeigewert der Zeitplanungsanforderung zu konfigurieren, und der zweite Anzeigewert verwendet wird, um den Bereich der Prioritätsstufe eines logischen Kanals anzuzeigen, der die von dem Benutzergerät zwischengespeicherten Uplink-Daten übermittelt;
die Zeitplanungsempfangseinheit (20) insbesondere konfiguriert ist, um die Zeitplanungsanforderung zu empfangen, die von dem Benutzergerät gemäß der von der Konfigurationssendeeinheit gesendeten Konfigurationsinformation gesendet wird, wobei die Zeitplanungsanforderung den zweiten Anzeigewert übermittelt;
die erste Zuweisungsverschiebungseinheit (302) konfiguriert ist, um zu bestimmen, dass der Bereich der Prioritätsstufe des logischen Kanals, der die von dem Benutzergerät zwischengespeicherten Uplink-Daten übermittelt, niedriger als ein eingestellter Wert ist, wobei der Bereich der Prioritätsstufe durch den zweiten Anzeigewert angezeigt wird, der in der von der Zeitplanungsempfangseinheit empfangenen Zeitplanungsanforderung übermittelt wird, und das Zuweisen der Uplink-Ressource zu dem Benutzergerät für eine erste Dauer zu verschieben; und/oder
die erste Zuweisungsvorverlegungseinheit (303) konfiguriert ist, um zu bestimmen, dass der Bereich der Prioritätsstufe des logischen Kanals, der die von dem Benutzergerät zwischengespeicherten Uplink-Daten übermittelt, gleich oder höher als der eingestellte Wert ist, wobei der Bereich der Prioritätsstufe durch den zweiten Anzeigewert angezeigt wird, und das Zuweisen der Uplink-Ressource zu dem Benutzergerät für eine zweite Dauer vorzuverlegen.

14. Basisstation nach Anspruch 11, wobei:
die Zeitplanungseinheit (30) insbesondere eine zweite Zuweisungsverschiebungseinheit (304) und/oder eine zweite Zuweisungsvorverlegungseinheit (305) umfasst;
die Konfigurationssendeeinheit (10) insbesondere konfiguriert ist, um Konfigurationsinformation an das Benutzergerät zu senden, wobei die Konfigurationsinformation ein drittes Konfigurationselement umfasst, das dritte Konfigurationselement verwendet wird, um einen dritten Anzeigewert der Zeitplanungsanforderung zu konfigurieren, und der dritte Anzeigewert verwendet wird, um anzuzeigen, ob der Typ eines logischen Kanals, der die von dem Benutzergerät zwischengespeicherten Uplink-Daten übermittelt, ein Datenfunkträger (Data Radio Bearer, DRB) oder ein Signalisierungsfunkträger (Signaling Radio Bearer, SRB) ist;
die Zeitplanungsempfangseinheit (20) insbesondere konfiguriert ist, um die Zeitplanungsanforderung zu empfangen, die von dem Benutzergerät gemäß der von der Konfigurationssendeeinheit gesendeten Konfigurationsinformation gesendet wird, wobei die Zeitplanungsanforderung den dritten Anzeigewert übermittelt;
die zweite Zuweisungsverschiebungseinheit (304) konfiguriert ist, um zu bestimmen, dass der Typ des logischen Kanals, der die von dem Benutzergerät zwischengespeicherten Uplink-Daten übermittelt, der Datenfunkträger (DRB) ist, wobei die Prioritätsstufe durch den dritten Anzeigewert angezeigt wird, der in der von der Zeitplanungsempfangseinheit empfangenen Zeitplanungsanforderung übermittelt wird, und das Zuweisen der Uplink-Ressource zu dem Benutzergerät für eine dritte Dauer zu verschieben; und/oder
die zweite Zuweisungsvorverlegungseinheit (305) konfiguriert ist, um zu bestimmen, dass der Typ des logischen Kanals, der die von dem Benutzergerät zwischengespeicherten Uplink-Daten übermittelt, der Signalisierungsfunkträger (SRB) ist, wobei der Typ durch den dritten Anzeigewert angezeigt wird, und das Zuweisen der Uplink-Ressource zu dem Benutzergerät für eine vierte Dauer vorzuverlegen.

15. Basisstation nach Anspruch 11, wobei:
die Zeitplanungseinheit (30) eine Vorzugszuweisungseinheit (306) umfasst;
die Konfigurationssendeeinheit (10) insbesondere konfiguriert ist, um eine Konfigurationsinformation an das Benutzergerät zu senden, wobei die Konfigurationsinformation ein viertes Konfigurationselement umfasst, das vierte Konfigurationselement verwendet wird, um einen vierten Anzeigewert der Zeitplanungsanforderung zu konfigurieren, und der vierte Anzeigewert verwendet wird, um die Ankunft von Uplink-Daten anzuzeigen, deren Prioritätsstufe höher als die Prioritätsstufe der Uplink-Daten ist, die bereits einen Pufferstatusbericht ausgelöst haben oder einen neuen Pufferstatusberichts auf dem Benutzergerät in einem Zeitraum von dem Senden einer vorherigen Zeitplanungsanforderung durch ein Benutzergerät bis zum Empfangen einer entsprechenden Uplink-Genehmigung auslösen;
die Zeitplanungsempfangseinheit (20) insbesondere konfiguriert ist, um die Zeitplanungsanforderung zu empfangen, die von dem Benutzergerät gemäß der von der Konfigurationssendeeinheit gesendeten Konfigurationsinformation gesendet wird, wobei die Zeitplanungsanforderung einen vierten Anzeigewert übermittelt; und
die Vorzugszuweisungseinheit (306) konfiguriert ist, um die Uplink-Ressource vorzugsweise dem Benutzergerät zuzuweisen, das der Zeitplanungsanforderung entspricht, die einen geänderten vierten Anzeigewert übermittelt, wenn der vierte Anzeigewert in der von der Zeitplanungsempfangseinheit empfangenen Zeitplanungsanforderung sich im Vergleich zu dem vierten Anzeigewert in einer zuvor gesendeten Zeitplanungsanforderung geändert hat.

16. Benutzergerät, umfassend:
eine Konfigurationsempfangseinheit (20), die konfiguriert ist, um eine von einer Basisstation gesendete Konfigurationsinformation zu empfangen, wobei die Konfigurationsinformation zum Konfigurieren eines Modus verwendet wird, in dem eine vom Benutzergerät gesendete Zeitplanungsanforderung ein Attribut von Uplink-Daten anzeigt, die von dem Benutzergerät zwischengespeichert werden, wobei das Attribut der von dem Benutzergerät zwischengespeicherten Uplink-Daten mindestens eines der Folgenden umfasst: einen Bereich einer Menge der von dem Benutzergerät zwischengespeicherten Uplink-Daten, eine Prioritätsstufe eines logischen Kanals, der die von dem Benutzergerät zwischengespeicherten Uplink-Daten übermittelt, und einen Typ des logischen Kanals, der die von dem Benutzergerät zwischengespeicherten Uplink-Daten übermittelt; und
eine Zeitplanungsanforderungssendeeinheit (21), die konfiguriert ist, um die Zeitplanungsanforderung an die Basisstation gemäß dem durch die Konfigurationsinformation, die von der Konfigurationsempfangseinheit (20) empfangen wurde, konfigurierten Modus zu senden, wobei die Zeitplanungsanforderung eine Anzeigeinformation übermittelt, die das Attribut der von dem Benutzergerät zwischengespeicherten Uplink-Daten anzeigt, sodass die Basisstation dem Benutzergerät eine Uplink-Ressource gemäß der in der Zeitplanungsanforderung übermittelten Anzeigeinformation zuweist.

## Revendications

1. Procédé d'ordonnancement de données montantes, le procédé comprenant les étapes suivantes :
envoi (101) d'informations de configuration à un équipement utilisateur, les informations de configuration servant à configurer un mode dans lequel une requête d'ordonnancement envoyée par l'équipement utilisateur indique un attribut de données montantes mises en mémoire tampon par l'équipement utilisateur, l'attribut des données montantes mises en mémoire tampon par l'équipement utilisateur comprenant : une plage d'une quantité des données montantes mises en mémoire tampon par l'équipement utilisateur et/ou une plage d'un niveau de priorité d'un canal logique acheminant les données montantes mises en mémoire tampon par l'équipement utilisateur et/ou un type du canal logique acheminant les données montantes mises en mémoire tampon par l'équipement utilisateur ;
réception (102) de la requête d'ordonnancement envoyée par l'équipement utilisateur selon les informations de configuration, la requête d'ordonnancement acheminant des informations d'indication indiquant l'attribut des données montantes mises en mémoire tampon par l'équipement utilisateur ; et
allocation (103) d'une ressource montante à l'équipement utilisateur selon les informations d'indication acheminées dans la requête d'ordonnancement.

2. Procédé selon la revendication 1, dans lequel le mode dans lequel la requête d'ordonnancement envoyée par l'équipement utilisateur indique l'attribut des données montantes mises en mémoire tampon par l'équipement utilisateur comprend en outre :
un format d'un canal physique de commande montant utilisé par l'équipement utilisateur pour envoyer la requête d'ordonnancement.

3. Procédé selon la revendication 1 ou 2, dans lequel :
les informations de configuration comprennent un premier élément de configuration, le premier élément de configuration servant à configurer une première valeur d'indication de la requête d'ordonnancement, et la première valeur d'indication servant à indiquer la plage de la quantité de données montantes mises en mémoire tampon par l'équipement utilisateur ;
la requête d'ordonnancement achemine la première valeur d'indication ; et
l'étape d'allocation de la ressource montante à l'équipement utilisateur selon les informations d'indication acheminées dans la requête d'ordonnancement comprend l'étape suivante :
allocation à l'équipement utilisateur de la ressource montante correspondant à la plage de la quantité de données montantes indiquée par la première valeur d'indication.

4. Procédé selon la revendication 1 ou 2, dans lequel :
les informations de configuration comprennent un deuxième élément de configuration, le deuxième élément de configuration servant à configurer une deuxième valeur d'indication de la requête d'ordonnancement, et la deuxième valeur d'indication servant à indiquer la plage du niveau de priorité d'un canal logique acheminant les données montantes mises en mémoire tampon par l'équipement utilisateur ;
la requête d'ordonnancement achemine la deuxième valeur d'indication ;
l'étape d'allocation de la ressource montante à l'équipement utilisateur selon les informations d'indication acheminées dans la requête d'ordonnancement comprend l'étape suivante :
détermination que la plage du niveau de priorité du canal logique acheminant les données montantes mises en mémoire tampon par l'équipement utilisateur est inférieure à une valeur de consigne, la plage du niveau de priorité étant indiquée par la deuxième valeur d'indication, et report de l'étape d'allocation de la ressource montante à l'équipement utilisateur d'une première durée ; ou
détermination que la plage du niveau de priorité du canal logique acheminant les données montantes mises en mémoire tampon par l'équipement utilisateur est supérieure ou égale à la valeur de consigne, la plage du niveau de priorité étant indiquée par la deuxième valeur d'indication, et avancement de l'étape d'allocation de la ressource montante à l'équipement utilisateur d'une deuxième durée.

5. Procédé selon la revendication 1 ou 2, dans lequel :
les informations de configuration comprennent un troisième élément de configuration, le troisième élément de configuration servant à configurer une troisième valeur d'indication de la requête d'ordonnancement, et la troisième valeur d'indication servant à indiquer si le type du canal logique acheminant les données montantes mises en mémoire tampon par l'équipement utilisateur est un support radio de données, dit DRB, ou un support radio de signalisation, dit SRB ;
la requête d'ordonnancement achemine la troisième valeur d'indication ;
l'étape d'allocation de la ressource montante à l'équipement utilisateur selon les informations d'indication acheminées dans la requête d'ordonnancement comprend l'étape suivante :
report de l'étape d'allocation de la ressource montante à l'équipement utilisateur d'une troisième durée lorsque le type du canal logique acheminant les données montantes mises en mémoire tampon par l'équipement utilisateur est le support radio de données, DRB, le type étant indiqué par la troisième valeur d'indication ; ou
avancement de l'étape d'allocation de la ressource montante à l'équipement utilisateur d'une quatrième durée lorsque le type du canal logique acheminant les données montantes mises en mémoire tampon par l'équipement utilisateur est le support radio de signalisation, SRB, le type étant indiqué par la troisième valeur d'indication

6. Procédé selon la revendication 1 ou 2, dans lequel :
les informations de configuration comprennent un quatrième élément de configuration, le quatrième élément de configuration sert à configurer une quatrième valeur d'indication de la requête d'ordonnancement, et la quatrième valeur d'indication sert à indiquer l'arrivée de données montantes dont le niveau de priorité est plus élevé que le niveau de priorité des données montantes ayant déjà déclenché un rapport d'état de mémoire tampon ou déclenchant un nouveau rapport d'état de mémoire tampon sur l'équipement utilisateur dans une période allant de l'envoi d'une requête d'ordonnancement précédente par l'équipement utilisateur à la réception d'une attribution de liaison montante correspondante ;
la requête d'ordonnancement achemine la quatrième valeur d'indication ;
l'étape d'allocation de la ressource montante à l'équipement utilisateur selon les informations d'indication acheminées dans la requête d'ordonnancement comprend l'étape suivante :
lorsque la quatrième valeur d'indication dans la requête d'ordonnancement a changé par rapport à la quatrième valeur d'indication dans une requête d'ordonnancement précédemment envoyée, allocation de la ressource montante de préférence à l'équipement utilisateur correspondant à la requête d'ordonnancement qui achemine la quatrième valeur d'indication qui a changé.

7. Procédé selon la revendication 1 ou 2, dans lequel :
la requête d'ordonnancement envoyée par l'équipement utilisateur selon les informations de configuration comprend :
la requête d'ordonnancement envoyée par l'équipement utilisateur lorsque la requête d'ordonnancement envoyée par l'équipement utilisateur selon le mode configuré par les informations de configuration et un retour d'information du protocole de requête de retransmission automatique hybride, dit HARQ, envoyé par l'équipement utilisateur ne sont pas transmis sur la même sous-trame.

8. Procédé selon la revendication 1 ou 2, dans lequel :
l'étape d'envoi des informations de configuration à l'équipement utilisateur comprend l'étape suivante :
envoi des informations de configuration à l'équipement utilisateur par acheminement des informations de configuration dans un message d'établissement de connexion de contrôle des ressources radio ou dans un message de reconfiguration de connexion de contrôle des ressources radio ou dans un message de rétablissement de connexion de contrôle des ressources radio ou dans un message de diffusion.

9. Procédé d'ordonnancement en liaison montante, le procédé comprenant les étapes suivantes :
réception (201) d'informations de configuration envoyées par une station de base, les informations de configuration servant à configurer un mode dans lequel une requête d'ordonnancement envoyée par un équipement utilisateur indique un attribut de données montantes mises en mémoire tampon par l'équipement utilisateur, l'attribut des données montantes mises en mémoire tampon par l'équipement utilisateur comprenant : une plage d'une quantité des données montantes mises en mémoire tampon par l'équipement utilisateur et/ou une plage d'un niveau de priorité d'un canal logique acheminant les données montantes mises en mémoire tampon par l'équipement utilisateur et/ou un type du canal logique acheminant les données montantes mises en mémoire tampon par l'équipement utilisateur ; et
envoi (202) de la requête d'ordonnancement à la station de base selon le mode configuré par les informations de configuration, la requête d'ordonnancement acheminant des informations d'indication indiquant l'attribut des données montantes mises en mémoire tampon par l'équipement utilisateur de façon à ce que la station de base alloue une ressource montante à l'équipement utilisateur selon les informations d'indication acheminées dans la requête d'ordonnancement.

10. Procédé selon la revendication 9, dans lequel :
les informations de configuration comprennent un format d'un canal physique de commande montant utilisé par l'équipement utilisateur pour envoyer la requête d'ordonnancement ;
l'étape d'envoi de la requête d'ordonnancement à la station de base comprend l'étape suivante :
envoi de la requête d'ordonnancement à la station de base selon le format du canal physique de commande montant utilisé par l'équipement utilisateur pour envoyer la requête d'ordonnancement, le format étant contenu dans les informations de configuration.

11. Station de base, la station de base comprenant :
une unité d'envoi de configuration (10), configurée pour envoyer des informations de configuration à un équipement utilisateur, les informations de configuration servant à configurer un mode dans lequel une requête d'ordonnancement envoyée par l'équipement utilisateur indique un attribut de données montantes mises en mémoire tampon par l'équipement utilisateur, l'attribut des données montantes mises en mémoire tampon par l'équipement utilisateur comprenant : une plage d'une quantité des données montantes mises en mémoire tampon par l'équipement utilisateur et/ou une plage d'un niveau de priorité d'un canal logique acheminant les données montantes mises en mémoire tampon par l'équipement utilisateur et/ou un type du canal logique acheminant les données montantes mises en mémoire tampon par l'équipement utilisateur ;
une unité de réception d'ordonnancement (20), configurée pour recevoir la requête d'ordonnancement envoyée par l'équipement utilisateur selon les informations de configuration envoyées par l'unité d'envoi de configuration, la requête d'ordonnancement acheminant des informations d'indication indiquant l'attribut des données montantes mises en mémoire tampon par l'équipement utilisateur ; et
une unité d'ordonnancement (30), configurée pour allouer une ressource montante à l'équipement utilisateur selon les informations d'indication acheminées dans la requête d'ordonnancement reçue par l'unité de réception d'ordonnancement (20).

12. Station de base selon la revendication 11, dans laquelle :
l'unité d'ordonnancement (30) comprend une unité d'allocation de quantité de données (301) ;
l'unité d'envoi de configuration (10) est plus particulièrement configurée pour envoyer des informations de configuration à l'équipement utilisateur, les informations de configuration comprennent un premier élément de configuration, le premier élément de configuration servant à configurer une première valeur d'indication de la requête d'ordonnancement, et la première valeur d'indication servant à indiquer la plage de la quantité de données montantes mises en mémoire tampon par l'équipement utilisateur ;
l'unité de réception d'ordonnancement (20) est plus particulièrement configurée pour recevoir la requête d'ordonnancement envoyée par l'équipement utilisateur selon les informations de configuration envoyées par l'unité d'envoi d'ordonnancement, la requête d'ordonnancement acheminant la première valeur d'indication ; et
l'unité d'allocation de quantité de données (301) est configurée pour allouer à l'équipement utilisateur une ressource montante correspondant à la quantité des données montantes indiquée par la première valeur d'indication reçue par l'unité de réception d'ordonnancement.

13. Station de base selon la revendication 11, dans laquelle :
l'unité d'ordonnancement comprend une première unité de report d'allocation (302) et/ou une première unité d'avancement d'allocation (303) ;
l'unité d'envoi de configuration (10) est plus particulièrement configurée pour envoyer des informations de configuration à l'équipement utilisateur, les informations de configuration comprenant un deuxième élément de configuration, le deuxième élément de configuration servant à configurer une deuxième valeur d'indication de la requête d'ordonnancement, et la deuxième valeur d'indication servant à indiquer la plage du niveau de priorité d'un canal logique acheminant les données montantes mises en mémoire tampon par l'équipement utilisateur ;
l'unité de réception d'ordonnancement (20) est plus particulièrement configurée pour recevoir la requête d'ordonnancement envoyée par l'équipement utilisateur selon les informations de configuration envoyées par l'unité d'envoi de configuration, la requête d'ordonnancement acheminant la deuxième valeur d'indication ;
la première unité de report d'allocation (302) est configurée pour déterminer que la plage du niveau de priorité du canal logique acheminant les données montantes mises en mémoire tampon par l'équipement utilisateur est inférieure à une valeur de consigne, la plage du niveau de priorité étant indiquée par la deuxième valeur d'indication acheminée dans la requête d'ordonnancement reçue par l'unité de réception d'ordonnancement, et reporter l'allocation de la ressource montante à l'équipement utilisateur d'une première durée ; et/ou
la première unité d'avancement d'allocation (303) est configurée pour déterminer que la plage du niveau de priorité du canal logique acheminant les données montantes mises en mémoire tampon par l'équipement utilisateur est supérieure ou égale à la valeur de consigne, la plage du niveau de priorité étant indiquée par la deuxième valeur d'indication, et avancer l'allocation de la ressource montante à l'équipement utilisateur d'une deuxième durée.

14. Station de base selon la revendication 11, dans laquelle :
l'unité d'ordonnancement (30) comprend plus particulièrement une deuxième unité de report d'allocation (304) et/ou une deuxième unité d'avancement d'allocation (305) ;
l'unité d'envoi de configuration (10) est plus particulièrement configurée pour envoyer des informations de configuration à l'équipement utilisateur, les informations de configuration comprenant un troisième élément de configuration, le troisième élément de configuration servant à configurer une troisième valeur d'indication de la requête d'ordonnancement, et la troisième valeur d'indication servant à indiquer si le type d'un canal logique acheminant les données montantes mises en mémoire tampon par l'équipement utilisateur est un support radio de données, dit DRB, ou un support radio de signalisation, dit SRB ;
l'unité de réception d'ordonnancement (20) est plus particulièrement configurée pour recevoir la requête d'ordonnancement envoyée par l'équipement utilisateur selon les informations de configuration envoyées par l'unité d'envoi de configuration, la requête d'ordonnancement acheminant la troisième valeur d'indication ;
la deuxième unité de report d'allocation (304) est configurée pour déterminer que le type du canal logique acheminant les données montantes mises en mémoire tampon par l'équipement utilisateur est le support radio de données, DRB, le niveau de priorité étant indiqué par la troisième valeur d'indication acheminée dans la requête d'ordonnancement reçue par l'unité de réception d'ordonnancement, reporter l'allocation de la ressource montante à l'équipement utilisateur d'une troisième durée ; et/ou
la deuxième unité d'avancement d'allocation (305) est configurée pour déterminer que le type du canal logique acheminant les données montantes mises en mémoire tampon par l'équipement utilisateur est le support radio de signalisation, SRB, le type étant indiqué par la troisième valeur d'indication, avancer l'allocation de la ressource montante à l'équipement utilisateur d'une quatrième durée.

15. Station de base selon la revendication 11, dans laquelle :
l'unité d'ordonnancement (30) comprend une unité d'allocation préférentielle (306) ;
l'unité d'envoi d'ordonnancement (10) est plus particulièrement configurée pour envoyer des informations de configuration à l'équipement utilisateur, les informations de configuration comprenant un quatrième élément de configuration, le quatrième élément de configuration servant à configurer une quatrième valeur d'indication de la requête d'ordonnancement, et la quatrième valeur d'indication servant à indiquer l'arrivée de données montantes dont le niveau de priorité est plus élevé que le niveau de priorité des données montantes ayant déjà déclenché un rapport d'état de mémoire tampon ou déclenchant un nouveau rapport d'état de mémoire tampon sur l'équipement utilisateur dans une période allant de l'envoi d'une requête d'ordonnancement précédente par l'équipement utilisateur à la réception d'une attribution de liaison montante correspondante ;
l'unité de réception d'ordonnancement (20) est plus particulièrement configurée pour recevoir la requête d'ordonnancement envoyée par l'équipement utilisateur selon les informations de configuration envoyées par l'unité d'envoi de configuration, la requête d'ordonnancement acheminant la quatrième valeur d'indication ; et
l'unité d'allocation préférentielle (306) est configurée pour allouer de préférence la ressource montante à l'équipement utilisateur correspondant à la requête d'ordonnancement qui achemine une quatrième valeur d'indication qui a changé, lorsque la quatrième valeur d'indication dans la requête d'ordonnancement reçue par l'unité de réception d'ordonnancement a changé par rapport à la quatrième valeur d'indication dans une requête d'ordonnancement précédemment envoyée.

16. Équipement utilisateur, comprenant :
une unité de réception de configuration (20), configurée pour recevoir des informations de configuration envoyées par une station de base, les informations de configuration servant à configurer un mode dans lequel une requête d'ordonnancement envoyée par un équipement utilisateur indique un attribut de données montantes mises en mémoire tampon par l'équipement utilisateur, l'attribut des données montantes mises en mémoire tampon par l'équipement utilisateur comprenant : une plage d'une quantité des données montantes mises en mémoire tampon par l'équipement utilisateur et/ou un niveau de priorité d'un canal logique acheminant les données montantes mises en mémoire tampon par l'équipement utilisateur et/ou un type du canal logique acheminant les données montantes mises en mémoire tampon par l'équipement utilisateur ; et
une unité d'envoi de requête d'ordonnancement (21), configurée pour envoyer la requête d'ordonnancement à la station de base selon le mode configuré par les informations de configuration reçues par l'unité de réception de configuration (20), la requête d'ordonnancement acheminant des informations d'indication indiquant l'attribut des données montantes mises en mémoire tampon par l'équipement utilisateur de façon à ce que la station de base alloue une ressource montante à l'équipement utilisateur selon les informations d'indication acheminées dans la requête d'ordonnancement.
